# EUROPÄISCHE PATENTSCHRIFT

(11) **EP 3 479 669 B1**
(45) Veröffentlichungstag und Bekanntmachung des Hinweises auf die Patenterteilung: **26.08.2020**
(21) Anmeldenummer: 18204380.2
(22) Anmeldetag: 05.11.2018
(51) Int. Cl.: A01B 73/00, A01B 73/04, A01B 59/042

(54) **LANDWIRTSCHAFTLICHE MASCHINE**
AGRICULTURAL MACHINE
MACHINE AGRICOLE

(30) Priorität: 03.11.2017 DE 102017125727
(43) Veröffentlichungstag der Anmeldung: 08.05.2019
(73) Patentinhaber: Reiter, Thomas, 4707 Schlüsselberg (AT)
(72) Erfinder: Reiter, Thomas, 4707 Schlüsselberg (AT)
(74) Vertreter: Puschmann Borchert Bardehle Patentanwälte Partnerschaft mbB

(56) Entgegenhaltungen:
- EP-A1- 0 503 395
- EP-A1- 2 979 529
- US-A1- 2003 221 401

## Beschreibung

Die Erfindung betrifft eine landwirtschaftliche Maschine gemäß dem Anspruch 1 und ein Verfahren zum Überführen der landwirtschaftlichen Maschine von einer Arbeitsstellung in eine Transportstellung derselben nach Anspruch 10.

Die DE 103 32 751 A1 zeigt eine landwirtschaftliche Maschine mit einem Achsrahmen, der um eine vertikale Achse gegenüber der Radachse schwenkbar ist. Um die Mäheinheiten von einer Arbeits- in eine Transportposition zu bringen, werden die Mäheinheiten seitlich nach oben geklappt.

Eine ähnliche Anordnung zeigt die US 2003 / 0 221 401 A1, bei der der Deichselrahmen ebenfalls um eine vertikale Achse gegenüber der Radachse. In dieser Anordnung wird die Mäheinheit um in Transportstellung gebracht zu werden vor den Rädern um etwa 90° geschwenkt.

Es ist Aufgabe der Erfindung eine landwirtschaftliche Maschine anzugeben, die gute Transporteigenschaften bei möglichst großer Arbeitsbreite einer Arbeitseinheit bereitstellt.

Die Aufgabe wird durch die Merkmale des Anspruchs 1 gelöst.

Die Unteransprüche bilden vorteilhafte Weiterbildungen der Erfindung.

Erfindungsgemäß umfasst eine solche landwirtschaftliche Maschine eine Arbeitseinheit, einen Deichselrahmen, und einen Achsrahmen, wobei der Achsrahmen wenigstens zwei Räder trägt, die eine Radachse bilden, und der Deichselrahmen derart am Achsrahmen angeordnet ist, dass der Achsrahmen über den Deichselrahmen mit einer Zugmaschine so verbunden sein kann, dass der Achsrahmen von der Zugmaschine gezogen werden kann, wobei eine orthogonale Richtung zur Radachse in der horizontalen Ebene eine Haupterstreckungsrichtung definiert, wobei der Deichselrahmen über ein Achsrahmengelenk mit dem Achsrahmen verbunden ist, dessen Achsrahmen-Schwenkachse quer zur Radachse und quer zur Vertikalen auf die Radachse liegt, also zwischen einschließlich 0° bis einschließlich ± 15°, insbesondere zwischen einschließlich 0°und einschließlich ± 10°, gegenüber der Haupterstreckungsrichtung in Vertikal- und Horizontalrichtung geneigt. Insbesondere liegt die Achsrahmens-Schwenkachse parallel zur Haupterstreckungsrichtung, so dass der Deichselrahmen gegenüber dem Achsrahmen um die Achsrahmen-Schwenkachse schwenkbar ist. Ferner ist die Arbeitseinheit über eine Anbindungseinheit hängend und um ihre Hochachse schwenkbar am Deichselrahmen befestigt. Insbesondere ist die Arbeitseinheit in Fahrtrichtung vor dem Achsrahmen an dem Deichselrahmen befestigt. Die Arbeitseinheit ist dazu über ein Arbeitseinheits-Gelenk, das eine Arbeitseinheits-Schwenkachse definiert, mit dem Deichselrahmen verbunden. Die Arbeitseinheits-Schwenkachse liegt insbesondere in Arbeitsstellung quer zur Radachse und quer zur Haupterstreckungsrichtung. Unter quer ist orthogonal, mit einer Toleranz von ±15° zur jeweiligen Achse zu verstehen. Bevorzugt erstreckt sich der Deichselrahmen in einer gestreckten Arbeitsstellung orthogonal zur Radachse und parallel zur Haupterstreckungsrichtung. Die Arbeitsstellung wird in der Beschreibung bei ebenem Boden betrachtet.

Durch die Erfindung kann eine im Deichselrahmen hängende Arbeitseinheit mit ihrer Arbeitslinie von einer Arbeitsposition, die quer zur Fahrtrichtung verläuft, in eine Transportstellung, in der die Arbeitslinie im Wesentlichen in Fahrtrichtung verläuft, geschwenkt werden, so dass die Arbeitseinheit über ein Rad der Radachse geschwenkt werden kann. So kann eine landwirtschaftliche Maschine mit einer Arbeitseinheit großer Breite, insbesondere einer Breite zwischen 3,5 Metern und 9 Metern, mit kompakten Transportabmessungen und mit einer relativ kurzen Deichselrahmen- und Gesamtlänge erreicht werden. Durch den relativ kurzen Deichselrahmen kann die Radachse im Transportzustand nahe der Zugmaschine geführt werden, was zu einem sehr guten Nachlaufverhalten führt.

Der Abstand zwischen dem Arbeitseinheitsgelenk und der Radachse in der Horizontalen im gestreckten Zustand ist insbesondere kleiner als die halbe Breite der Arbeitseinheit.

Durch die Möglichkeit, die Arbeitseinheit, der Länge nach über den Achsrahmen zu schwenken kann die Arbeitseinheit nahe der Achse angeordnet sein. Dies führt zu einer hohen Kippstabilität während des Betriebs und einer hohen Fahrstabilität während des Transports.

Bevorzugt ist das Achsrahmengelenk außermittig der Radachse angeordnet, wobei der Deichselrahmen in seiner Haupterstreckung etwa mittig zur Radachse liegt. Diese Lage des Achsrahmengelenks hat den Vorteil, dass eine Verkippung des Deichselrahmens gegenüber dem Achsrahmen zu einer Vergrößerung des Abstands zwischen dem Deichselrahmen und dem Achsrahmen führt, um Raum für die Arbeitseinheit in der Transportstellung zu schaffen.

Der Deichselrahmen kann einteilig ausgebildet sein. Der Deichselrahmen kann zum Anschluss an das Achsrahmengelenk in einem Anbindungsbereich eine derart abgewinkelte Ausbildung aufweisen, dass die Haupterstreckung des Deichselrahmens sich mittig in Fahrtrichtung ergibt und dennoch eine außermittige Anbindung an das Achsrahmengelenk möglich ist.

Bevorzugt ist der Anbindungsbereich des Deichselrahmens an den Achsrahmen in Projektion auf eine Ebene, die von der Radachse und einer Lotrechten durch die Radachse aufgespannt wird, ebenfalls winkelig ausgeführt. Insbesondere verläuft der Anbindungsbereich des Deichselrahmens in Arbeitsstellung im mittigen Bereich parallel zum Achsrahmen und im weiteren Verlauf zum Achsgelenk hin in einem stumpfen Winkel abfallend. Eine ähnliche Ausbildung des Anbindungsbereichs kann auch in Form eines Bogens erfolgen.

In einer Arbeitsstellung befindet sich die Arbeitseinheit mit ihrer Arbeitslinie quer zur Fahrtrichtung. Die Fahrtrichtung bestimmt sich insbesondere dadurch, dass diese horizontal und orthogonal zur Radachse liegt.

Der Deichselrahmen kann teleskopierbar ausgebildet sein.

Bevorzugt ist der Deichselrahmen derart ausgebildet, dass dieser zwei Rahmenteile umfasst, die gelenkig um die Hochachse bzw. quer zur Haupterstreckungsrichtung schwenkbar über ein Deichselrahmengelenk miteinander verbunden sind. Dies ermöglicht ein Ausschwenken der Arbeitseinheit hinter der Zugmaschine, so dass die Arbeitseinheit auch neben der Zugmaschine arbeiten kann.

Weist der Deichselrahmen ein Deichselrahmengelenk auf, kann eine Parallelverschiebung zwischen Achsrahmen und Arbeitseinheit orthogonal zur Fahrtrichtung erfolgen, indem der Deichselrahmen mit der Arbeitseinheit in einem Winkel zum Achsrahmen geschwenkt wird, den die Arbeitseinheit mit einer Schwenkbewegung um die Hochachse ausgleichen kann. Auch eine gezielte Schrägstellung der Arbeitseinheit gegenüber der Fahrtrichtung kann dadurch erreicht werden, was insbesondere bei der Ausbildung der Arbeitseinheit als Erntegutaufnehmer die Rechleistung, insbesondere im Hinblick auf die Rechqualität und die Schwadablage, verbessert.

Bevorzugt ist in der Draufsicht, der Abstand des Deichselrahmengelenks zum Arbeitseinheitsgelenk etwa doppelt so groß, wie der Abstand des Deichselrahmengelenks von der Radachse.

Gemäß einer vorteilhaften Ausgestaltung liegt die Achsrahmen-Schwenkachse in horizontaler Richtung außerhalb der Innenseite eines Rads. Dies ermöglicht eine möglichst große Abstandsänderung des Deichselrahmens vom Achsrahmen, bei möglichst geringem Schwenkwinkel.

Insbesondere liegt die Achsrahmen-Schwenkachse in Radachsrichtung über der Radfläche.

Der Achsrahmen ist in seiner Form so auf die Arbeitseinheit abgestimmt, dass diese in ihrer Tiefe geringer ist als der Abstand der Außenkanten der Räder. Dies sorgt dafür, dass die Arbeitseinheit im Transportzustand nicht über die Rädergrenzen hinausragen kann.

Die Arbeitseinheit kann eine Mäheinrichtung, insbesondere einen Mähbalken umfassen.

Bevorzugt ist die Arbeitseinheit ein Erntegutaufnehmer, insbesondere umfasst diese einen Pick-Up Bandschwader.

Der Achsrahmen weist ein abgewinkeltes Profil auf, so dass dieser einen vertikalen Raum zwischen den Rädern lässt. Ferner kann der Rahmen derart ausgebildet sein, dass dieser etwa von der Radmitte in vertikaler Richtung verläuft und so gebogen ist, dass das Achsrahmen-Gelenk über dem Rad liegt.

Hier wird ein möglichst großer Freiraum zwischen der vertikalen Lage des Achsrahmen-Gelenks und der Radachse geschaffen.

So kann besonders bei einer entsprechenden Ausgestaltung des Achsrahmens in Verbindung mit einer zuvor beschriebenen winkeligen Gestaltung des Deichselrahmens ein möglichst großer Freiraum zwischen dem Achsrahmen und dem Deichselrahmen im Bereich zwischen den Rädern erreicht werden, der durch die Arbeitseinheit in Transportstellung genutzt werden kann.

Ferner betrifft die Erfindung ein Verfahren zum Überführen einer landwirtschaftlichen Maschine nach einem der vorangehenden Ansprüche von einer Arbeitsstellung in eine Transportposition, dadurch gekennzeichnet, dass der Deichselrahmen um die Achsrahmenachse geschwenkt wird und dass nachfolgend die Arbeitseinheit um etwa 90° in eine Transportstellung geschwenkt wird, wobei der Deichselrahmen um die Achsrahmen-Schwenkachse von einem Öffnungswinkel in Arbeitsstellung zu einem Öffnungswinkel in Transportstellung geschwenkt wird und dass die Arbeitseinheit um die Arbeitseinheitsschwenkachse von der Arbeitsstellung in die Transportstellung geschwenkt wird.

Der Schwenkwinkel um die Arbeitseinheitsschwenkachse beträgt bevorzugt 90° mit einer Toleranz von ± 15°, wonach die Arbeitseinheit von einer Querrichtung in eine Längsrichtung gebracht werden kann.

Gemäß einer ersten Anwendung kann der Deichselrahmen zuerst von dem Öffnungswinkel in Arbeitsstellung zu dem Öffnungswinkel in Transportstellung geschwenkt werden und anschließend um die Arbeitseinheitsschwenkachse von der Arbeitsstellung in eine Transportstellung geschwenkt werden.

Gemäß einer weiteren Anwendung kann der Deichselrahmen stufenweise von dem Öffnungswinkel in Arbeitsstellung zu dem Öffnungswinkel in Transportstellung geschwenkt werden, wobei abwechselnd die Arbeitseinheit stufenweise um die Arbeitseinheitsschwenkachse von der Arbeitsstellung in die Transportstellung geschwenkt werden.

Ferner kann, sofern der Achsrahmen genügend Platz bietet, nach dem Schwenken der Arbeitseinheit in die Transportstellung, der Öffnungswinkel zwischen dem Deichselrahmen und dem Achsrahmen reduziert werden.

Dieser Verfahrensschritt ist besonders vorteilhaft, wenn die Arbeitseinheit als Mäheinheit ausgebildet ist.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: eine Seitenansicht einer erfindungsgemäßen landwirtschaftlichen Maschine;
- Fig. 2a: eine erfindungsgemäße landwirtschaftliche Maschine gemäß Fig. 1 in Draufsicht in gerader Position;
- Fig. 2b: eine erfindungsgemäße landwirtschaftliche Maschine gemäß Fig. 2a bei geschwenktem Deichselrahmen ;
- Fig. 3: eine perspektivische Ansicht der landwirtschaftlichen Maschine gemäß Fig. 2a;
- Fig. 4: eine landwirtschaftliche Maschine gemäß Fig. 3 in einer rückwärtigen Ansicht;
- Fig. 5: eine landwirtschaftliche Maschine in einer Aushebestellung;
- Fig. 6: eine landwirtschaftliche Maschine in einer rückwärtigen Ansicht bei um den Achsrahmen geschwenktem Deichselrahmen;
- Fig. 7: eine landwirtschaftliche Maschine in einer rückwärtigen Ansicht bei um den Achsrahmen geschwenktem Deichselrahmen und teilweise geschwenktem Erntegutaufnehmer;
- Fig. 8a: eine landwirtschaftliche Maschine in einer rückwärtigen Ansicht bei um den Achsrahmen geschwenktem Deichselrahmen und vollständig in Transportposition geschwenktem Erntegutaufnehmer, und
- Fig. 8b: eine landwirtschaftliche Maschine gemäß Fig. 8a in einer Seitenansicht.

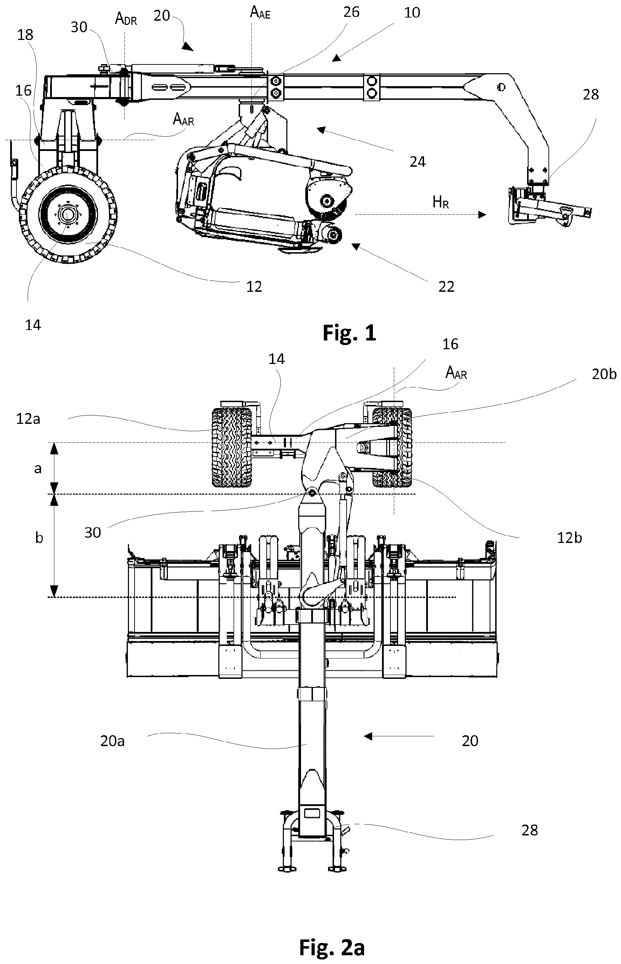

Fig. 1 zeigt eine Seitenansicht einer erfindungsgemäßen landwirtschaftlichen Maschine 10, umfassend ein Rad 12 einer Radachse 14, die einen Achsrahmen 16 trägt. Der Achsrahmen 16 ist über ein Achsrahmen-Gelenk 18 mit einem Deichselrahmen 20 verbunden. Der Deichselrahmen 20 ist eingerichtet, ans Heck eines Traktors oder einer Zugmaschine angekoppelt zu werden. Der Deichselrahmen 20 trägt ferner einen Erntegutaufnehmer 22, nämlich einen Pick-Up Bandschwader, der über eine Anbindungseinheit 24 und über ein Arbeitseinheits-Gelenk 26 an den Deichselrahmen 20 angebunden ist. Das Arbeitseinheits-Gelenk 26 definiert dabei eine Schwenkachse A_{AE} die in Arbeitsposition quer, also orthogonal mit einer Toleranz von ± 15°, zur Haupterstreckungsrichtung H_{R} und quer zur Radachse 14 liegt. Der Erntegutaufnehmer 22 ist auf diese Weise in den Deichselrahmen 20 schwenkbar eingehängt und in seiner Neigung und seinem Abstand zum Deichselrahmen 20 über die Anbindungseinheit 24 einstellbar. Fig. 1 zeigt die landwirtschaftliche Maschine 10 in ihrer Arbeitsposition, bei welcher sich der Erntegutaufnehmer 22 in der Arbeitsstellung befindet.

Das Achsrahmen-Gelenk 18 definiert eine Achsrahmen-Schwenkachse A_{AR}, die quer zur Radachse 14 und etwa horizontal liegt, also quer zur Vertikalen auf die Radachse.

Das Achsrahmen-Gelenk 18 liegt in vertikaler Richtung über dem Rad 12a, 12b.

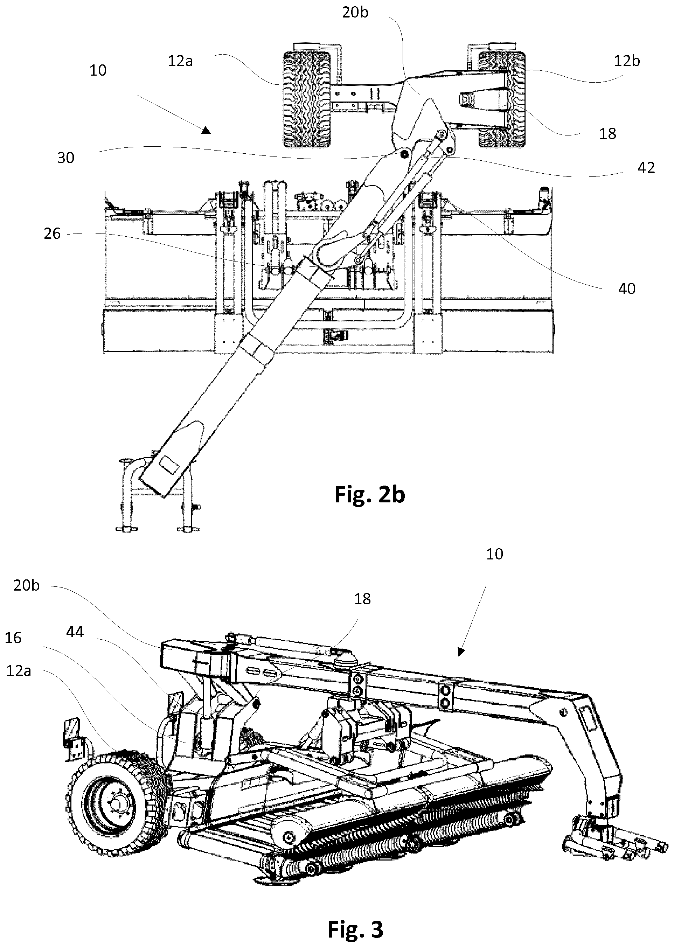

Fig. 2 zeigt eine erfindungsgemäße landwirtschaftliche Maschine 10 gemäß Fig. 1 in Draufsicht. Sie zeigt die Radachse 14 mit den beiden Rädern 12a, 12b, den Achsrahmen 16 sowie den Deichselrahmen 20. Gemäß diesem Ausführungsbeispiel ist der Deichselrahmen 20 zweiteilig ausgebildet. Der Deichselrahmen 20 umfasst ein erstes Deichselrahmen-Element 20a und ein zweites Deichselrahmen-Element 20b. Das erste Deichselrahmen-Element 20a weist eine Ankopplungseinheit 28 zur Verbindung mit einer Zugmaschine auf. Ferner trägt das erste Deichselrahmen-Element 20a den Erntegutaufnehmer 22. Das zweite Deichselrahmen-Element 20b ist sowohl in horizontaler als auch in vertikaler Richtung winkelig ausgeführt und stellt über das Achsrahmen-Gelenk 18 die Verbindung mit dem Achsrahmen 16 her. Die winkelige Ausführung dient dazu, das Achsrahmen-Gelenk 18, das in der Draufsicht über dem Rad liegt und somit außermittig der Radachse 14 angeordnet ist, mit dem ersten Deichselrahmenelement 20a so zu verbinden, dass diese mittig zum Achsrahmen 16 liegen kann. Das erste Deichselrahmenelement 20a und das zweite Deichselrahmenelement 20b sind über ein Deichselrahmen-Gelenk 30 miteinander verbunden. Das Deichselrahmen-Gelenk 30 definiert eine Deichselrahmen-Schwenkachse A_{DR}, die in Arbeitsposition quer zur Radachse 14 und quer zum Deichselrahmen 20 liegt. Diese Deichselrahmen-Schwenkachse A_{DR} liegt insbesondere parallel zur Arbeitseinheits-Schwenkachse A_{AE}. Durch eine solche Ausgestaltung des Deichselrahmens 20 kann der Erntegutaufnehmer 22 mit dem Rahmen hinter der Zugmaschine ausschwenken und dennoch seine Arbeitsrichtung, die im Wesentlichen quer zur Fahrtrichtung liegt, einhalten.

Eine solche Position ist in Draufsicht in Fig. 2b dargestellt. So kann über einen ersten Zylinder 40 der Winkel zwischen dem Achsrahmen 16 und dem ersten Deichselrahmen-Element 20a eingestellt werden und über einen zweiten Zylinder 42 der Winkel der Arbeitseinheit gegenüber dem ersten Deichselrahmen-Element 20a.

Fig. 2a zeigt ferner, dass der Abstand b vom Arbeitseinheitsgelenk 26 zum Deichselrahmengelenk 30 doppelt so groß ist, wie der Abstand a von der Radachse 14 zum Deichselrahmengelenk 30.

Fig. 3 zeigt eine perspektivische Ansicht der landwirtschaftlichen Maschine 10 gemäß Fig.2a. Besonders gut zu erkennen ist in dieser Darstellung, wie sich der Achsrahmen 16 in Vertikal- und Horizontalrichtung über das Rad 12b hinweg erstreckt. Ferner ist gut zu erkennen, wie der Achsrahmen 16 über das Achsrahmen-Gelenk 18 mit dem zweiten Deichselrahmen-Element 20b verbunden ist. Das zweite Deichselrahmen-Element 20b ist über einen Zylinder 44 gegen den Achsrahmen 16 abgestützt. Ein Verfahren der Kolbenstange des Zylinders 44 führt zu einem Aufspreizen des Deichselrahmen-Elements 20b gegenüber dem Achsrahmen 16, wodurch der gesamte Deichselrahmen 20 um diese Achse gekippt wird. Dies wird in den nachfolgenden Figuren beschrieben.

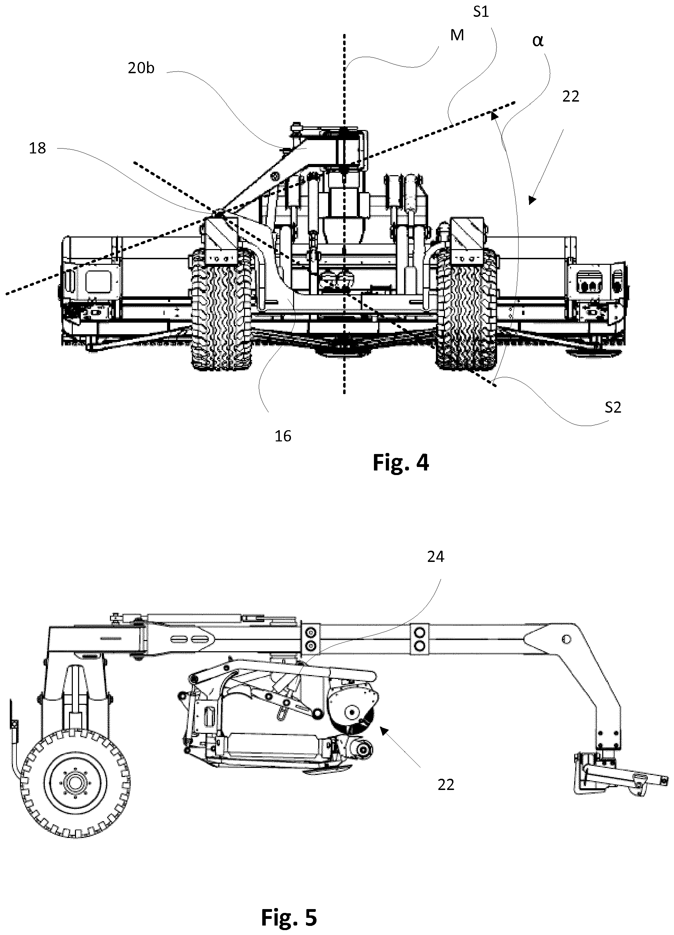

Fig. 4 zeigt eine landwirtschaftliche Maschine 10 gemäß Fig. 3 in einer rückwärtigen Ansicht in der Arbeitsstellung. In der Arbeitsstellung liegt der Öffnungswinkel α zwischen dem ersten Deichselrahmen-Element 20b und dem Achsrahmen in Arbeitsstellung bei etwa 50°. Der Winkel wird von zwei virtuellen Schenkeln gebildet, wobei ein Schenkel S1 sich von der Unterkante des Deichselrahmens in einer Arbeitsposition in der Mittelebene M der landwirtschaftlichen Maschine 10 auf Höhe der Radachse zum Achsrahmengelenk 18 erstreckt und der andere Schenkel S2 von der Oberkante des Achsrahmens 16 in der Mittelebene zum Achsrahmengelenk 18.

Die Höhe ist dabei so eingestellt, dass der Deichselrahmen 20 in seiner Haupterstreckung in der Arbeitsposition im Wesentlichen horizontal liegt.

In den nachfolgenden Figuren wird beschrieben, wie die landwirtschaftliche Maschine 10 von der Arbeitsstellung in eine Transportstellung überführt wird.

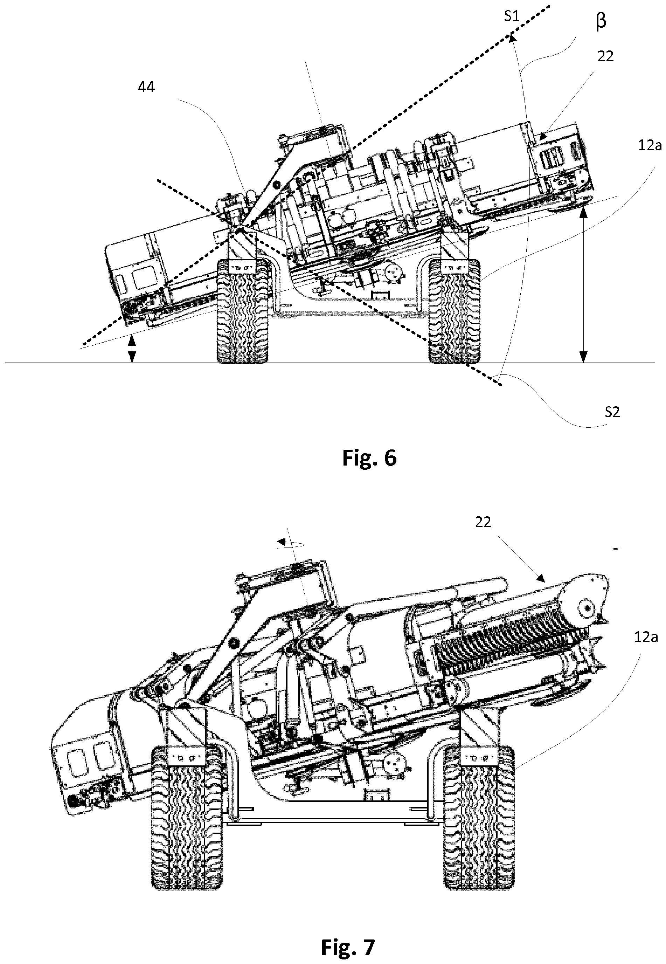

Zuerst wird, wie in einer Seitenansicht gemäß Fig. 5 dargestellt, die Anbindungseinheit 24 in eine Aushebestellung gebracht wobei der Erntegutaufnehmer 22 vom Boden angehoben wird und mit seiner Unterkante im Wesentlichen parallel zur Haupterstreckungsrichtung H_{R} zu liegen kommt. In einem nächsten Schritt wird, wie Fig. 6 in einer rückwärtigen Ansicht zeigt, der Deichselrahmen 20 gegenüber dem Achsrahmen 16 durch Ausfahren des Zylinders 44 verschwenkt. Dies erfolgt zu einem Öffnungswinkel β von etwa 70° der virtuellen Schenkel S1 und S2, wobei der Deichselrahmen 20 im Zuge der Schwenkbewegung die Mittelebene verlässt. Dies führt zu einer Schräglage des Erntegutaufnehmers 22, der immer noch quer zur Fahrtrichtung steht. Diese Schrägstellung gegenüber der Horizontalen ist so gewählt, dass der Erntegutaufnehmer 22 an seinem bodennahen Ende noch eine Rest-Bodenfreiheit aufweist, wobei das andere Ende so hoch liegt, dass die Verbindungslinie der beiden unteren Enden das von dem Achsrahmen-Gelenk 18 entfernt liegende Rad 12a in der horizontalen Projektion in Haupterstreckungsrichtung nicht schneidet.

Dadurch ist gewährleistet, dass bei einer Schwenkbewegung des Erntegutaufnehmers 22 um die Arbeitseinheitsschwenkachse, wie sie in Fig. 7 dargestellt ist, der Erntegutaufnehmer 22 nicht mit dem Rad 12a kollidiert sondern über das Rad hinweggeschwenkt wird.

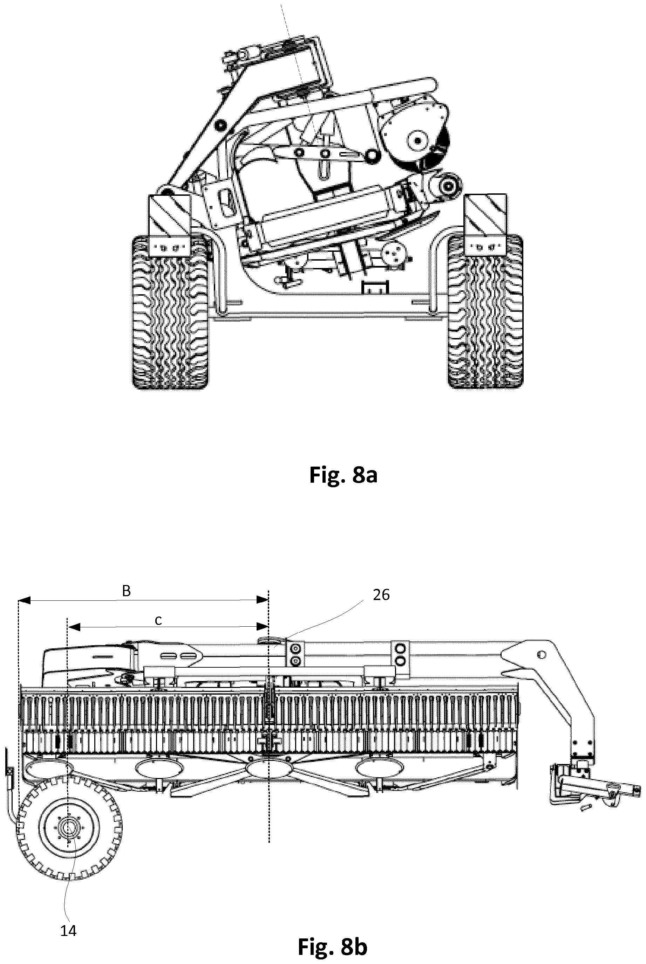

Auf diese Weise kann der Erntegutaufnehmer 22 dann in die in Fig. 8a dargestellte Transportposition gebracht werden, so dass die Arbeitseinheit innerhalb der durch die Radaußenkanten vorgegebene Transportbreite liegt.

Fig. 8b zeigt die landwirtschaftliche Maschine 10 in Transportstellung in einer Seitenansicht. In dieser Darstellung ist gut zu erkennen, dass der Abstand c des Arbeitseinheits-Gelenks 26 zur Radachse 14 kleiner ist als die halbe Breite B des Erntegutaufnehmers 22. Der Erntegutaufnehmer 22 liegt damit in seiner Transportstellung in Längsrichtung und teilweise über der Radachse 14. Dies sorgt während des Transports für eine gute Lastverteilung, bessere Spurtreue und verbessertes Fahrverhalten.

### Bezugszeichenliste

- 10: landwirtschaftliche Maschine
- 12: Rad
- 14: Radachse
- 16: Achsrahmen
- 18: Achsrahmen-Gelenk
- 20: Deichselrahmen
- 20a: erstes Deichselrahmen-Element
- 20b: zweites Deichselrahmen-Element
- 22: Erntegutaufnahmer
- 24: Anbindungseinheit
- 26: Arbeitseinheits-Gelenk
- 28: Ankopplungseinheit
- 30: Deichselrahmen-Gelenk
- 40: erster Zylinder
- 42: zweiter Zylinder
- 44: dritter Zylinder

- α: Öffnungswinkel in Arbeitsstellung
- β: Öffnungswinkel in Transportstellung
- M: Mittelebene
- S1: virtueller Schenkel
- S2: virtueller Schenkel

- H_{R}: Haupterstreckungsrichtung
- A_{AE}: Arbeitseinheits-Schwenkachse
- A_{AR}: Achsrahmen-Schwenkachse
- A_{DR}: Deichselrahmen-Schwenkachse

## Patentansprüche

1. Landwirtschaftliche Maschine (10), umfassend eine Arbeitseinheit (22), einen Deichselrahmen (20), und einen Achsrahmen (16), wobei der Achsrahmen (16) wenigstens zwei Räder (12a, 12b) trägt, die eine Radachse (14) bilden, und der Deichselrahmen (20; 20a, 20b) derart mit dem Achsrahmen (16) verbunden ist, dass der Achsrahmen (16) über den Deichselrahmen (20; 20a, 20b) mit einer Zugmaschine so verbunden sein kann, dass der Achsrahmen (16) von der Zugmaschine gezogen werden kann, wobei eine orthogonale Richtung zur Radachse in der horizontale Ebene eine Haupterstreckungsrichtung (H_{R}) definiert, wobei der Deichselrahmen (20; 20a, 20b) über ein Achsrahmen-Gelenk (18) mit dem Achsrahmen (16) verbunden ist, dessen Achsrahmen-Schwenkachse (A_{AR}) quer zur Radachse (14) und quer zur Vertikalen auf die Radachse (R_{A}) liegt, so dass der Deichselrahmen (20; 20a, 20b) gegenüber dem Achsrahmen (16) schwenkbar ist und dass die Arbeitseinheit (22) über ein Arbeitseinheits-Gelenk (26), das eine Arbeitseinheitsschwenkachse (A_{AE}) definiert, schwenkbar am Deichselrahmen (20; 20a, 20b) hängend befestigt ist.

2. Landwirtschaftliche Maschine nach Anspruch 1, **dadurch gekennzeichnet, dass** das Achsrahmengelenk (18) außermittig der Radachse (14) angeordnet ist, wobei der Deichselrahmen (20; 20a, 20b) in seiner Längsrichtung mittig zur Radachse (14) liegt.

3. Landwirtschaftliche Maschine nach Anspruch 2, **dadurch gekennzeichnet, dass** der Deichselrahmen (20) einteilig ausgebildet ist und zum Anschluss an das Achsrahmen-Gelenk (18) hin eine winkelige Ausbildung aufweist, so dass die Längsrichtung des Deichselrahmens sich mittig in Haupterstreckungsrichtung (H R) ergibt und dennoch eine außermittige Anbindung an das Achsrahmen-Gelenk (18) möglich ist.

4. Landwirtschaftliche Maschine nach Anspruch 2, **dadurch gekennzeichnet, dass** der Deichselrahmen zwei Rahmenteile (20a, 20b) umfasst, die gelenkig um die Hochachse schwenkbar über ein Deichselrahmen-Gelenk (30) miteinander verbunden sind.

5. Landwirtschaftliche Maschine nach einem der vorangehenden Ansprüche, **dadurch gekennzeichnet, dass** die Achsrahmen-Schwenkachse (A_{AR}) in Querrichtung außerhalb der Innenseite eines Rads (12a) liegt.

6. Landwirtschaftliche Maschine nach dem vorangehenden Anspruch, **dadurch gekennzeichnet, dass** die Achsrahmen-Schwenkachse(A_{AR}) in Querrichtung außerhalb der Innenseite eines Rads (12a) und innerhalb der Außenseite des Rads (12b) liegt.

7. Landwirtschaftliche Maschine nach dem vorangehenden Anspruch, **dadurch gekennzeichnet, dass** die Arbeitseinheit eine Mäheinheit ist.

8. Landwirtschaftliche Maschine nach dem vorangehenden Anspruch, **dadurch gekennzeichnet, dass** die Arbeitseinheit ein Erntegutaufnehmer (22) ist.

9. Landwirtschaftliche Maschine nach Anspruch 8, **dadurch gekennzeichnet, dass** der Erntegutaufnehmer (22) ein Pick-UP Bandschwader ist.

10. Verfahren zum Überführen einer landwirtschaftlichen Maschine nach einem der vorangehenden Ansprüche von einer Arbeitsstellung in eine Transportstellung, **dadurch gekennzeichnet, dass** der Deichselrahmen (20) um die Achsrahmen-Schwenkachse (A_{AR}) von einem Öffnungswinkel in Arbeitsstellung (α) zu einem Öffnungswinkel in Transportstellung (β) geschwenkt wird und dass die Arbeitseinheit (22) um die Arbeitseinheitsschwenkachse (A_{AE}) von der Arbeitsstellung in die Transportstellung geschwenkt wird.

11. Verfahren nach Anspruch 10, **dadurch gekennzeichnet, dass** der Deichselrahmen (20) zuerst von dem Öffnungswinkel in Arbeitsstellung (α) zu dem Öffnungswinkel in Transportstellung (β) geschwenkt wird und anschließend um die Arbeitseinheitsschwenkachse (A_{AE}) in eine Transportstellung geschwenkt wird.

12. Verfahren nach Anspruch 10, **dadurch gekennzeichnet, dass** der Deichselrahmen (20) stufenweise von dem Öffnungswinkel in Arbeitsstellung (α) zu dem Öffnungswinkel in Transportstellung (β) geschwenkt wird, wobei abwechselnd die Arbeitseinheit stufenweise um die Arbeitseinheitsschwenkachse (A_{AE}) von der Arbeitsstellung in die Transportstellung geschwenkt wird.

13. Verfahren nach Anspruch 10 bis 12, **dadurch gekennzeichnet, dass** nach Einschwenken der Arbeitseinheit in die Transportstellung der Öffnungswinkel zwischen Deichselrahmen und Achsrahmen reduziert wird.

## Claims

1. Agricultural machine (10) comprising a working unit (22), a drawbar frame (20) and an axle frame (16), which axle frame (16) carries at least two wheels (12a, 12b) that form a wheel axle (14), and which drawbar frame (20; 20a, 20b) is connected to the axle frame (16) in such a way that the axle frame (16) can be coupled to a tractor via the drawbar frame (20; 20a, 20b) in a way that will allow the axle frame (16) to be pulled by the tractor, with a direction orthogonal to the wheel axle defining a main direction of extension (H_{R}) in the horizontal plane, which drawbar frame (20; 20a, 20b) is connected to the axle frame (16) via an axle frame joint (18), with the pivot axis (A_{AR}) of the axle frame being perpendicular to the wheel axle (14) and perpendicular to the vertical to the wheel axis (R_{A}), resulting in that the drawbar frame (20; 20a, 20b) can be pivoted relative to the axle frame (16) and in that the working unit (22) is pivotally suspended on the drawbar frame (20; 20a, 20b) via a working unit joint (26) that defines a working unit pivot axis (A_{AE}).

2. Agricultural machine according to claim 1, **characterized in that** the axle frame joint (18) is arranged eccentrically relative to the wheel axle (14), with the drawbar frame (20; 20a, 20b) in its longitudinal direction extending centrally relative to the wheel axle (14).

3. Agricultural machine according to claim 2, **characterized in that** the drawbar frame (20) is made in one piece and its portion to be coupled to the axle frame (18) is of an angular design, resulting **in that** the longitudinal direction of the drawbar frame is centered in the main extension direction (H_{R}) but will still allow it to be eccentrically coupled to the axle frame joint (18).

4. Agricultural machine according to claim 2, **characterized in that** the drawbar frame comprises two frame parts (20a, 20b) which are hinged together by means of a drawbar frame joint (30) so as to be pivotable about the vertical axis.

5. Agricultural machine according to any one of the preceding claims, **characterized in that** in the cross-wise direction, the axle frame pivot axis (A_{AR}) is outside of the inner side of a wheel (12a).

6. Agricultural machine according to any one of the preceding claims, **characterized in that** in the cross-wise direction, the axle frame pivot axis (A_{AR}) is outside of the inner side of a wheel (12a) and inside of the outer side of the wheel (12b).

7. Agricultural machine according to the preceding claim, **characterized in that** the working unit is a mower unit.

8. Agricultural machine according to the preceding claim, **characterized in that** the working unit is a crop collecting device (22).

9. Agricultural machine according to claim 8, **characterized in that** the crop collecting device (22) is a pick-up belt merger.

10. Method for transferring an agricultural machine according to any one of the preceding claims from a working position to a transport position thereof, **characterized in that** from an opening angle (α) for an operating position of the machine, the drawbar frame (20) is pivoted about the axle frame pivot axis (A_{AR}) to an opening angle (β) for a transport position of the machine, and that from an operating position of the working unit (22), the latter is pivoted about the working unit pivot axis (A_{AE}) to a transport position thereof.

11. Method according to claim 10, **characterized in that** the drawbar frame (20) is first pivoted from the opening angle (α) for the operating position to the opening angle (β) for the transport position and is then pivoted about the working unit pivot axis (A_{AE}) to a transport position.

12. Method according to claim 10, **characterized in that the** drawbar frame (20) is pivoted stepwise from the opening angle (α) for the operating position to the opening angle (β) for the transport position, in which process the working unit is alternately incrementally pivoted about the working unit pivot axis (A_{AE}) from its operating position to its transport position.

13. Method according to claims 10 to 12, **characterized in that** after the working unit has been completely pivoted to its transport position, the opening angle between the drawbar frame and the axle frame will be reduced.

## Revendications

1. Machine agricole (10), comprenant une unité de travail (22), un cadre de timon (20), et un cadre d'essieu (16), dans laquelle le cadre d'essieu (16) porte au moins deux roues (12a, 12b), qui forment un essieu (14), et le cadre de timon (20 ; 20a, 20b) est relié au cadre d'essieu (16) de telle sorte que le cadre d'essieu (16) peut être relié à un tracteur par l'intermédiaire du cadre de timon (20 ; 20a, 20b), de sorte que le cadre d'essieu (16) peut être extrait du tracteur, dans laquelle une direction orthogonale par rapport à l'essieu dans le plan horizontal définit une direction d'étendue principale (H_{R}), dans laquelle le cadre de timon (20 ; 20a, 20b) est relié par l'intermédiaire d'une articulation de cadre d'essieu (18) au cadre d'essieu (16), dont l'axe de pivotement de cadre d'essieu (A_{AR}) se situe transversalement à l'essieu (14) et transversalement par rapport à la verticale sur l'essieu (R_{A}), de sorte que le cadre de timon (20 ; 20a, 20b) peut pivoter par rapport au cadre d'essieu (16) et que l'unité de travail (22) est fixée en suspension de manière pivotante sur le cadre de timon (20 ; 20a, 20b) par l'intermédiaire d'une articulation d'unité de travail (26), qui définit un axe de pivotement d'unité de travail (A_{AE}).

2. Machine agricole selon la revendication 1, **caractérisée en ce que** l'articulation de cadre d'essieu (18) est disposée de manière excentrée par rapport à l'essieu (14), dans laquelle cadre de timon (20; 20a, 20b) se situe dans sa direction longitudinale de manière centrale par rapport à l'essieu (14).

3. Machine agricole selon la revendication 2, **caractérisée en ce que** le cadre de timon (20) est réalisé en une seule pièce et, pour le raccordement à l'articulation de cadre d'essieu (18), présente une réalisation angulaire, de sorte que la direction longitudinale du cadre de timon est obtenue de manière centrale dans la direction d'étendue principale (H_{R}) et cependant un rattachement excentré à l'articulation de cadre d'essieu (18) est possible.

4. Machine agricole selon la revendication 2, **caractérisée en ce que** le cadre de timon comprend deux parties de cadre (20a, 20b), qui sont reliées l'une à l'autre de manière articulée par l'intermédiaire d'une articulation de cadre de timon (30) de manière à pouvoir pivoter autour de l'axe vertical.

5. Machine agricole selon l'une quelconque des revendications précédentes, **caractérisée en ce que** l'axe de pivotement de cadre d'essieu (A_{AR}) se situe dans la direction transversale à l'extérieur de la face intérieure d'une roue (12a).

6. Machine agricole selon la revendication précédente, **caractérisée en ce que** l'axe de pivotement de cadre d'essieu (A_{AR}) se situe dans la direction transversale à l'extérieur de la face intérieure d'une roue (12a) et à l'intérieur de la face extérieure de la roue (12b).

7. Machine agricole selon la revendication précédente, **caractérisée en ce que** l'unité de travail est une unité de moissonnage.

8. Machine agricole selon la revendication précédente, **caractérisée en ce que** l'unité de travail est une récolteuse (22).

9. Machine agricole selon la revendication 8, **caractérisée en ce que** la récolteuse (22) est un andaineur-ramasseur.

10. Procédé pour amener une machine agricole selon l'une quelconque des revendications précédentes d'une position de travail dans une position de transport, **caractérisé en ce que** le cadre de timon (20) est amené à pivoter autour de l'axe de pivotement de cadre d'essieu (A_{AR}) d'un angle d'ouverture dans la position de travail (α) à un angle d'ouverture dans la position de transport (β) et que l'unité de travail (22) est amenée à pivoter autour de l'axe de pivotement d'unité de travail (A_{AE}) de la position de travail dans la position de transport.

11. Procédé selon la revendication 10, **caractérisé en ce que** le cadre de timon (20) est amené à pivoter tout d'abord de l'angle d'ouverture dans la position de travail (α) à l'angle d'ouverture dans la position de transport (β) et ensuite est amené à pivoter autour de l'axe de pivotement d'unité de travail (A_{AE}) dans une position de transport.

12. Procédé selon la revendication 10, **caractérisé en ce que** le cadre de timon (20) est amené à pivoter progressivement de l'angle d'ouverture dans la position de travail (α) à l'angle d'ouverture dans la position de transport (β), dans lequel, alternativement, l'unité de travail est amenée à pivoter progressivement autour de l'axe de pivotement d'unité de travail (A_{AE}) de la position de travail dans la position de transport.

13. Procédé selon la revendication 10 à 12, **caractérisé en ce que,** une fois l'unité de travail entrée par pivotement dans la position de transport, l'angle d'ouverture entre le cadre de timon et le cadre d'essieu est réduit.
